# EUROPÄISCHE PATENTSCHRIFT

(11) **EP 3 493 937 B1**
(45) Veröffentlichungstag und Bekanntmachung des Hinweises auf die Patenterteilung: **11.10.2023**
(21) Anmeldenummer: 17751702.6
(22) Anmeldetag: 03.08.2017
(51) Int. Cl.: B23D 61/02

(54) **ERNTEMESSER UND VERFAHREN ZU DESSEN HERSTELLUNG**
HARVESTING KNIFE AND METHOD FOR THE PRODUCTION THEREOF
LAME DE RÉCOLTE ET PROCÉDÉ DE FABRICATION

(30) Priorität: 05.08.2016 DE 102016114552
(43) Veröffentlichungstag der Anmeldung: 12.06.2019
(73) Patentinhaber: Wimatec Mattes GmbH, 88356 Ostrach (DE)
(72) Erfinder: MATTES, Stefan, 88356 Ostrach (DE)
(74) Vertreter: Daub, Thomas
(86) Internationale Anmeldenummer: PCT/EP2017/069738
(87) Internationale Veröffentlichungsnummer: WO 2018/024854

(56) Entgegenhaltungen:
- EP-A1- 0 982 093
- EP-A1- 2 674 237
- CN-U- 201 726 671
- DE-A1- 3 327 895
- DE-B4- 19 825 758
- DE-C1- 10 145 170
- JP-A- S62 171 612
- JP-U- S56 134 128
- US-A- 435 380
- US-A- 5 855 157

## Beschreibung

### Stand der Technik

Die Erfindung betrifft ein Erntemesser und ein Verfahren zu dessen Herstellung.

Aus der DE 198 25 758 B1 ist eine Säge bekannt, die u.a. auch dazu vorgesehen ist, bei einer Maisernte eingesetzt zu werden. Die Säge weist einen Grundkörper auf, der dazu vorgesehen ist, um eine ihm zugeordnete Antriebsrotationsachse in einer Maschine rotierend angewandt zu werden, und an seinem Umfang Zähne aufweist. Ferner weist das Erntemesser eine Beschichtung auf, die auf einer Seite des Grundkörpers partiell angeordnet ist. DE19825758 B1 offenbart ein Erntemesser gemäß dem Oberbegriff des Anspruchs 1.

Die Aufgabe der Erfindung besteht insbesondere darin, ein Erntemesser mit verbesserten Schneideigenschaften und/oder verbesserten Eigenschaften hinsichtlich einer Lebensdauer sowie ein vorteilhaftes Verfahren zur Herstellung eines entsprechenden Erntemessers bereitzustellen. Die Aufgabe wird insbesondere durch die Merkmale der unabhängigen Ansprüche gelöst, während vorteilhafte Ausgestaltungen und Weiterbildungen der Erfindung den Unteransprüchen entnommen werden können.

### Vorteile der Erfindung

Die Erfindung geht aus von einem Erntemesser mit einem Grundkörper, der dazu vorgesehen ist, um eine ihm zugeordnete Antriebsrotationsachse in einer Maschine rotierend angewandt zu werden, und an seinem Umfang mehrere Zähne aufweist.

Es wird vorgeschlagen, dass zumindest einer der Zähne vor einer ersten Anwendung zumindest eine angeformte Schneide aufweist.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Schneide" soll insbesondere ein Bereich des Grundkörpers verstanden werden, der in Richtung einer Schneidkante, insbesondere zumindest im Wesentlichen parallel zu einer Hauptebene des Grundkörpers, eine abnehmende Materialstärke aufweist und in der Schneidkante mündet, wobei die Materialstärke gestuft und/oder insbesondere bevorzugt kontinuierlich abnehmend ausgeführt sein kann. Unter "vor einer ersten Anwendung" soll insbesondere verstanden werden, dass die Schneide bereits bei der Herstellung mit an den Grundkörper angeformt wird, so dass diese bei einem neuen ungebrauchten Erntemesser vorhanden ist. Unter einer Hauptebene des Grundkörpers soll dabei insbesondere eine Ebene verstanden werden, welche durch eine Haupterstreckung des Grundkörpers aufgespannt und senkrecht zur Antriebsrotationsachse ausgerichtet ist. Ferner soll unter "zumindest im Wesentlichen" insbesondere eine Abweichung kleiner als 10° verstanden werden.

Durch eine entsprechende Ausgestaltung kann ein besonders vorteilhaftes Schneidverhalten bereits von Beginn eines Einsatzes des Erntemessers an erreicht werden. Ferner kann das Erntemesser besonders vorteilhaft im Hinblick auf einen geringen Verschleiß ausgelegt werden, und zwar insbesondere, indem die Schneide bereits bei der Herstellung ganz gezielt ausgelegt und insbesondere ganz gezielt positioniert werden kann.

Vorzugsweise erstreckt sich bei dem zumindest einen Zahn mit der zumindest einen Schneide, vorzugsweise bei zumindest einem Großteil der Zähne des Grundkörpers, die Schneide nur partiell über eine Außenkontur des Zahnes. Unter einer "Außenkontur" soll insbesondere eine Kontur eines Schattenbildes des Zahnes verstanden werden, und zwar insbesondere in Blickrichtung der Antriebsrotationsachse. Unter "partiell" soll in diesem Zusammenhang insbesondere verstanden werden, dass zumindest Teilbereiche der Außenkontur des Zahnes, und zwar insbesondere zumindest Teilstrecken der Kontur des Schattenbildes entweder mit einer anderen Schneide oder insbesondere auch schneidenfrei ausgebildet sind bzw. dass sich die einzelne Schneide nicht über die gesamte Außenkontur, d.h. nicht über die gesamte Kontur des Schattenbildes des Zahnes erstreckt.

Durch eine entsprechende Ausgestaltung kann der Zahn besonders robust ausgelegt und ein Ausfall von Zähnen im Betrieb kann reduziert und die Lebensdauer kann erhöht werden.

Zudem wird vorgeschlagen, dass der zumindest eine Zahn mit der zumindest einen Schneide, vorzugsweise bei zumindest einem Großteil der Zähne des Grundkörpers, einen Zahnrücken aufweist, der zumindest teilweise schneidenfrei ausgebildet ist, wodurch ein vorteilhaftes Schneidverhalten und zudem ein besonders stabiler Zahn erreicht werden können. Dabei soll unter einem "Zahnrücken" insbesondere ein Teil des Zahnes verstanden werden, der sich von einer in Rotationsrichtung weisenden Zahnbrust des Zahnes unterscheidet und/oder von einer radial nach außen weisenden Stirnseite des Grundkörpers gebildet wird. Grundsätzlich ist jedoch auch denkbar, dass Teilbereiche der Zahnbrust schneidenfrei und/oder dass Teilbereiche des Zahnrückens mit einer Schneide ausgebildet sind.

Ferner wird vorgeschlagen, dass der zumindest eine Zahn zumindest zwei Schneiden mit sich in ihrer Materialstärke unterscheidenden Schneidkanten aufweist, wodurch der Zahn besonders vorteilhaft gezielt auf seine unterschiedlichen Belastungen und Funktionen ausgelegt werden kann. Eine der Schneiden wird dabei vorzugsweise von einer in Umfangsrichtung verlaufenden Verjüngung gebildet, während die zweite Schneide von einer in radialer Richtung verlaufenden Verjüngung gebildet ist. Die Verjüngungen können durch Stufen und/oder vorzugsweise von kontinuierlichen Verläufen gebildet sein.

In einer weiteren Ausgestaltung wird vorgeschlagen, dass ein Zahnrücken des zumindest einen Zahns mit der zumindest einen Schneide, vorzugsweise bei zumindest einem Großteil der Zähne des Grundkörpers, in einer Ansicht in radialer Richtung zur Antriebsrotationsachse keilförmig ausgebildet ist. Unter einem "Keil" soll dabei insbesondere eine Form verstanden werden, bei der zwei Seitenflächen, und zwar im vorliegenden Fall vorzugsweise eine zumindest im Wesentlichen senkrecht zur Antriebsrotationsachse verlaufende obere Seitenfläche des Grundkörpers und eine zumindest im Wesentlichen senkrecht zur Antriebsrotationsachse verlaufende untere Seitenfläche des Grundkörpers, unter einem spitzen Winkel zusammenlaufen. Unter "zumindest im Wesentlichen" soll dabei wiederum eine Abweichung von kleiner als 10° verstanden werden.

Durch eine entsprechende Ausgestaltung kann die Schneide besonders einfach angeformt werden und es kann eine besonders wirkungsvolle Schneide erzielt werden.

Dabei können beide Seitenflächen in Richtung einer senkrecht zur Antriebsrotationsachse verlaufenden Mittelebene des Grundkörpers zulaufen und somit einen Doppelkeil bilden.

Besonders vorteilhaft verläuft jedoch in der Ansicht in radialer Richtung zur Antriebsrotationsachse eine Seitenfläche, und zwar vorzugsweise die gesamte Seitenfläche des Zahnrückens, zumindest im Wesentlichen, d.h. insbesondere mit einer Abweichung kleiner als 5° und vorzugsweise kleiner als 2%, parallel zu einer senkrecht zur Antriebsrotationsachse verlaufenden Hauptebene des Grundkörpers, wodurch die Schneide besonders kostengünstig angeformt werden kann.

Ferner wird vorgeschlagen, dass der Grundkörper zumindest teilweise aus einem kaltverfestigten Material gebildet ist, wodurch vorteilhaft dünne Bleche zur Herstellung des Grundkörpers verwendet werden können und vorteilhafte Schneideigenschaften bei hoher Lebensdauer erzielt werden können. Unter einem "kaltverfestigten Material" soll dabei insbesondere ein Material verstanden werden, das unterhalb einer Rekristallisationstemperatur und insbesondere bei einer Temperatur unter 100 °C, vorzugsweise bei einer Temperatur unter 50°C, gezielt zur Verfestigung umgeformt wurde. Besonders vorzugsweise ist das Material mittels Kaltwalzen verfestigt.

Vorzugsweise weist das kaltverfestigte Material, aus dem der Grundkörper zumindest teilweise gebildet ist, dabei eine Grundzugfestigkeit auf, die größer als 500 N/mm² und insbesondere größer als 600 N/mm² ist. Unter einer "Grundzugfestigkeit" soll dabei eine Zugfestigkeit verstanden werden, die ohne weitere Warmverfestigung vorliegt.

Weist das kaltverfestigte Material, aus dem der Grundkörper zumindest teilweise gebildet ist, eine Grundzugfestigkeit auf, die kleiner als 1000 N/mm² und insbesondere kleiner als 900 N/mm² ist, kann neben einer hohen Lebensdauer und einem dünnen Grundkörper weiterhin eine vorteilhafte Anformung der Schneiden sichergestellt werden.

Als Material eignet sich dabei insbesondere ein Vergütungsstahl, wie insbesondere besonders vorzugsweise ein 51CRV4 Stahl, oder auch ein Bohrstahl, wie insbesondere besonders vorzugsweise ein 30MNB5 Stahl.

Sind zumindest einzelne Schneiden zumindest teilweise mittels eines spanfreien Vorgangs, wie insbesondere mittels eines Prägevorgangs, angeformt, kann eine besonders kostengünstige Herstellung erreicht werden.

Ferner können vorteilhaft unerwünschte Spannungen und möglicherweise damit verbundene Beschädigungen, insbesondere während des Einsatzes, vermieden werden, wenn zumindest eine Schneide mittels eines Warmumformvorgangs angeformt ist, d.h. insbesondere bei einer Temperatur größer als 600 °C.

In einer weiteren Ausgestaltung der Erfindung wird vorgeschlagen, dass zumindest eine Schneide zumindest teilweise mittels eines materialabtragenden, insbesondere zerspanenden Vorgangs angeformt ist, wodurch diese besonders flexibel angeformt werden kann. Grundsätzlich ist auch denkbar, dass die Zähne durch eine Kombination von einem spanhabenden Prozess und einem spanlosen Prozess angeformt sind. Ferner ist auch denkbar, dass die zumindest eine Schneide mittels eines 3D-Laserschneides angeformt ist.

Ist der Grundkörper partiell wärmegehärtet, d.h. nur in einem einzelnen Bereich oder in einzelnen Bereichen, können kostengünstig gezielt einzelne Bereiche vorteilhaft auf ihre Belastungen ausgelegt werden. Besonders vorteilhaft ist der Grundkörper an seinem Außenumfang, d.h. insbesondere im Bereich der Schneiden, wärmegehärtet, wobei in einem weiter innenliegenden Bereich, d.h. in Richtung der Antriebsrotationsachse, vorteilhaft keine gesonderte Wärmehärtung vorliegt.

Ferner weist der Grundkörper vorteilhaft ein Sägezahnprofil auf. Dabei soll unter einem "Sägezahnprofil" insbesondere ein Profil verstanden werden, bei dem eine Zahnbrust, die vorzugsweise von einer Schneide gebildet ist, ausgehöhlt und insbesondere konkav ausgebildet ist und/oder in Rotationsrichtung geneigt ist und/oder insbesondere nicht entgegen der Rotationsrichtung geneigt ist und/oder dazu vorgesehen ist, ein Erntegut in einem Betrieb in Richtung der Antriebsrotationsachse zu bewegen. Unter "ausgehöhlt" soll dabei insbesondere verstanden werden, dass eine Radiale von der Antriebsrotationsachse durch eine Zahnspitze einen Freiraum zwischen der Zahnbrust und sich selbst einschließt. Durch eine entsprechende Ausgestaltung kann ein besonders vorteilhaft aggressives Schneidverhalten erreicht werden.

Weist der Grundkörper zumindest eine Zahnteilung auf, die in Umfangsrichtung über einer Strecke von einem halben Meter zu mehr als 8 Zähnen und insbesondere zu mehr als 15 Zähnen führt, kann ferner ein besonders vorteilhaftes Schneidverhalten erreicht werden. Unter einer "Zahnteilung" soll insbesondere ein Abstand in Umfangsrichtung zwischen zwei Zahnspitzen verstanden werden.

Weist der Grundkörper zumindest eine Zahnteilung auf, die in Umfangsrichtung über einer Strecke von einem halben Meter zu weniger als 30 Zähnen und insbesondere zu weniger als 28 Zähnen führt, kann neben einem vorteilhaften Schneidverhalten dennoch eine einfache Herstellung sichergestellt werden. Besonders vorteilhaft weist der Grundkörper eine Zahnteilung auf, die in Umfangsrichtung über einer Strecke von einem halben Meter zu einer Zahnanzahl zwischen 20 und 25 führt. Grundsätzlich ist auch denkbar, dass der Grundkörper unterschiedliche Zahnteilungen aufweist.

In einer weiteren Ausgestaltung der Erfindung wird vorgeschlagen, dass ein Zahnrücken des zumindest einen Zahns mit der zumindest einen Schneide, vorzugsweise bei zumindest einem Großteil der Zähne des Grundkörpers, zumindest teilweise mit einer Beschichtung versehen ist, wodurch ein Verschleiß weiter reduziert und die Lebensdauer weiter erhöht werden kann. Insbesondere kann ein Verschleiß reduziert werden, der durch eine translatorische Vorwärtsbewegung des Erntemessers, welche eine Rotationsbewegung des Erntemessers überlagert, bedingt ist.

Zudem wird ein Verfahren zur Herstellung eines erfindungsgemäßen Erntemessers vorgeschlagen.

Ferner wird ein Verfahren zur Herstellung eines Erntemesser mit einem Grundkörper, der dazu vorgesehen ist, um eine ihm zugeordnete Antriebsrotationsachse in einer Maschine rotierend angewandt zu werden, und an seinem Umfang mehrere Zähne aufweist, vorgeschlagen, wobei eine Wärmeenergie, die zu einem Beschichten des Grundkörper in diesen eingebracht wird, für einen Härteprozess des Grundkörpers genutzt wird. Ein Energieeintrag kann damit vorteilhaft für mehrere Herstellschritte genutzt werden und es können Herstellkosten eingespart werden, und zwar insbesondere, wenn nach einem Erhitzen für die Beschichtung vor dem Härteprozess keine weitere Erhitzung vorgenommen wird und/oder nach dem Erhitzen für die Beschichtung direkt eine aktive Abkühlung für den Härteprozess durchgeführt und/oder insbesondere keine aktive Abkühlung nach der Beschichtung und vor dem Härteprozess durchgeführt wird. Dabei soll unter einer "aktiven Abkühlung" insbesondere verstanden werden, dass der Grundkörper gezielt durch ein sich von einer Luft unterscheidendes Medium, wie insbesondere mit einem Fluid, und/oder mit einer gezielt erzeugten Strömung, wie insbesondere einer Gasströmung oder insbesondere einer Luftströmung, abgekühlt wird.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Erntemesser in einer Draufsicht,
- Fig. 2: einen vergrößerten Ausschnitt II aus Fig. 1,
- Fig. 3: einen Ausschnitt des Erntemessers in einer vergrößerten Ansicht in radialer Richtung zu einer Antriebsrotationsachse des Erntemessers,
- Fig. 4: einen Schnitt entlang der Linie IV-IV in Figur 2 in einer vergrößerten Darstellung,
- Fig. 5: einen schematisiert dargestellten Verfahrensablauf zur Herstellung des Erntemessers aus Figur 1,
- Fig. 6: einen Ausschnitt eines alternativen Erntemessers in einer Ansicht entsprechend der Figur 3 und
- Fig. 7: einen Fig. 4 entsprechenden Schnitt durch das alternative Erntemesser

### Beschreibung der Ausführungsbeispiele

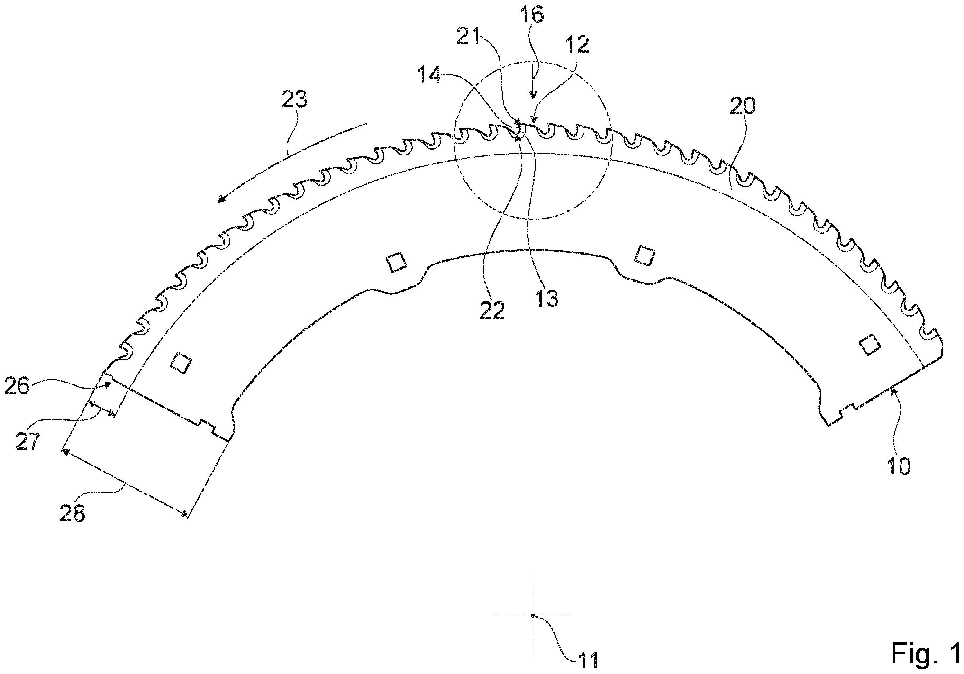

Figur 1 zeigt ein Erntemesser mit einem Grundkörper 10, der dazu vorgesehen ist, um eine ihm zugeordnete Antriebsrotationsachse 11 in einer nicht näher dargestellten Erntemaschine rotierend angewandt zu werden, und an seinem Umfang mehrere Zähne 12 aufweist. Das Erntemesser ist von einem Kreisringsegment gebildet und weist ein Sägezahnprofil auf. Mehrere entsprechende Erntemesser werden zu einem Kreisring zusammengesetzt und werden bei einem Erntevorgang gemeinsam rotierend um die Antriebsrotationsachse 11 angetrieben. Der Grundkörper 10 weist eine Zahnteilung 19 auf, die in Umfangsrichtung über eine Strecke von einem halben Meter zu 20 Zähnen 12 führt (Figuren 1 bis 4). Das Erntemesser weist einen Radius von 500 mm auf, grundsätzlich ist jedoch denkbar, dass das Erntemesser vorzugsweise einen Radius größer als 200 mm und kleiner als 1000 mm aufweist.

Die Zähne 12 weisen vor einer ersten Anwendung angeformte Schneiden 13 auf. Die Zähne 12 sind identisch ausgebildet. Grundsätzlich wäre jedoch auch denkbar, dass unterschiedlich ausgebildete Zähne vorgesehen sind. Die Zähne 12 sind in Umfangsrichtung direkt hintereinander angeordnet. Grundsätzlich wäre jedoch auch denkbar, dass die Zähen 12 geschränkt ausgebildet sind, d.h. dass zumindest einzelne Zähne in einer ersten Richtung parallel zur Antriebsrotationsachse 11 ausgelenkt sind und einzelne Zähne 12 in einer zweiten, der ersten Richtung entgegengesetzten Richtung parallel zur Antriebsrotationsachse 11 ausgelenkt sind.

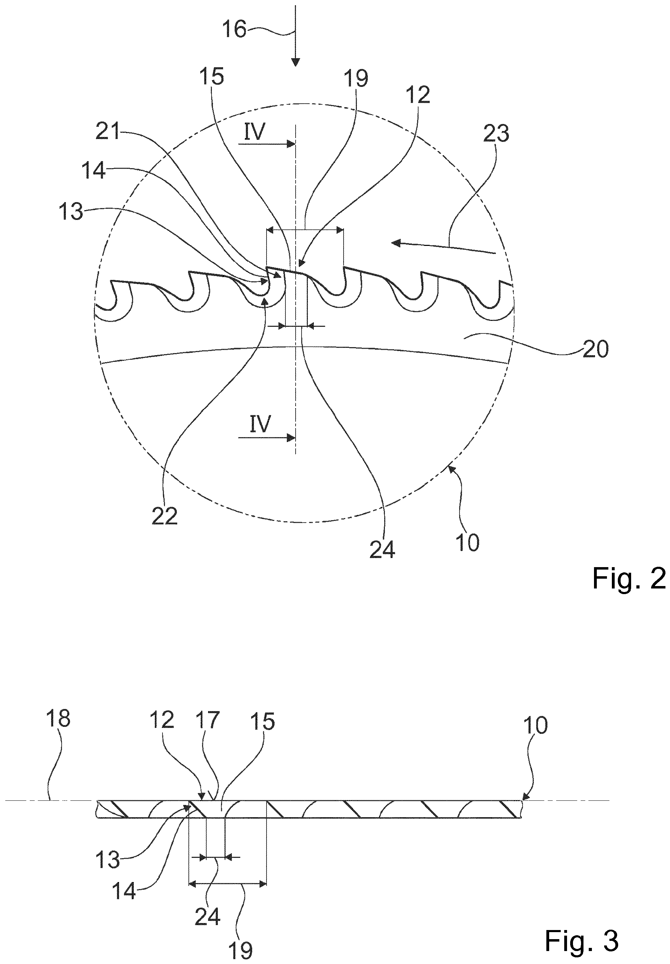

Die Schneide 13 erstreckt sich nur partiell über eine Außenkontur des Zahnes 12, und zwar weist der Zahn 12 einen Zahnrücken 15 auf, der teilweise schneidenfrei ausgebildet ist (Figuren 2, 3 und 4). Der Zahn 12 weist einen Bereich 21 auf, der in Richtung einer Schneidkante 14, parallel zu einer Hauptebene 18 des Grundkörpers 10, eine kontinuierlich abnehmende Materialstärke aufweist und in der Schneidkante 14 mündet. Die Schneide 13 erstreckt sich über eine gesamte Zahnbrust des Zahns 12. Der Bereich 21 erstreckt sich in Umfangsrichtung über einen Zahngrund 22 hinaus und endet bei einem Zahnrücken eines dem Zahn 12 in Schneidrichtung 23 nachfolgenden Zahnes. Zwischen zwei Bereichen 21 mit abnehmender Materialstärke weist der Zahnrücken 15 des Zahns 12 einen Bereich 24 auf, der schneidenfrei ist (Figuren 2 bis 4).

Der Zahnrücken 15 des Zahns 12 ist in einer Ansicht parallel zur Hauptebene 18, in radialer Richtung 16 zur Antriebsrotationsachse 11, keilförmig ausgebildet, wobei in der Ansicht parallel zur Hauptebene 18, in radialer Richtung 16 zur Antriebsrotationsachse 11 eine Seitenfläche 17 des Zahnrückens 15 parallel zur Hauptebene 18 des Grundkörpers 10 verläuft, und zwar in Umfangsrichtung über den gesamten Zahn 12 und insbesondere auch im Bereich der Schneide 13 (Figur 3).

Der Grundkörper 10 ist aus einem kaltverfestigen Material gebildet, und zwar aus einem kaltgewalzten Vergütungsstahl 51 CRV4. Der Grundkörper 10 weist eine Grundzugfestigkeit von zumindest im Wesentlichen, d.h. mit einer Abweichung kleiner als 15% und vorzugsweise kleiner als 10%, 800 N/mm² auf. Der Grundkörper 10 ist mittels eines Laserschneidverfahrens aus einem Vergütungsstahlblech ausgeschnitten. Anschließend sind die Schneiden 13 mittels eines materialabtragenden Vorgangs, und zwar mittels eines Fräsvorgangs, angeformt.

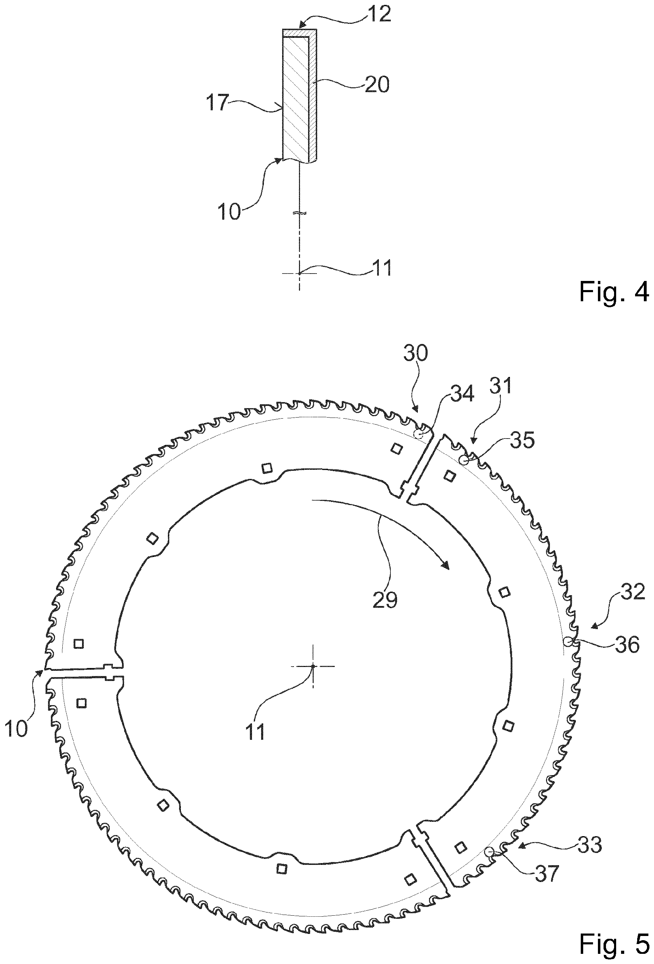

Der Grundkörper 10 ist an seinem Außenumfang partiell wärmegehärtet und partiell mit einer Beschichtung 20 versehen, und zwar in einem Bereich 26, der in radialer Richtung eine Erstreckung 27 aufweist, die im Wesentlichen 20% einer radialen Gesamterstreckung 28 des Grundkörpers 10 aufweist (Fig. 1). Dabei ist auch der Zahnrücken 15 des Zahns 12 mit der Beschichtung 20 versehen (Figuren 4 und 4a). Die Beschichtung 20 wird von einer Nickel-Basis-Legierung mit Wolframcarbit gebildet. Grundsätzlich sind jedoch auch andere, dem Fachmann als sinnvoll erscheinende metallische Legierungen, insbesondere mit Hartstoffen, denkbar.

In Figur 5 sind stark schematisiert verschiedene Verfahrensschritte zur Herstellung des Erntemessers dargestellt. Mehrere Erntemesser werden in Umfangsrichtung 29 hintereinander auf eine Vorrichtung aufgelegt, so dass die Erntemesser einfach nacheinander die gleichen Verfahrensschritte durchlaufen können. Vorzugsweise werden die Erntemesser zu einem Kreisring zusammengesetzt entsprechend ihrer späteren Verwendung in einer Erntemaschine. Vorzugsweise werden anschließend die Erntemesser verschiedenen Stationen 30, 31, 32, 33 zugeführt, indem diese in Umfangsrichtung 29 bewegt werden.

In einer Station 30 werden die Erntemesser von einem Brenner 34 von unten in einem Bereich ihres Außenumfangs bzw. in dem Bereich 26, der zur Beschichtung vorgesehen ist, vorgewärmt. In einer zweiten Station 32 wird im Bereich 26 des Außenumfangs von oben auf die Erntemesser mittels eines Brenners 35 Pulver zur Erzeugung der Beschichtung 20 aufgebracht. In einer dritten Station 32 wird das Pulver mittels eines Brenners 36 aufgeschmolzen. Eine vom Brenner 36 in den Grundkörper 10 eingebrachte Wärmeenergie, die zum Beschichten des Grundkörpers 10 genutzt wird, wird zudem für einen Härteprozess genutzt. Ohne weiteren Wärmeeintrag werden die Erntemesser in einer nachfolgenden, vorzugsweise sich unmittelbar an die Station 32 anschließenden Station 33 abgekühlt. In der Station 33 werden die Erntemesser mittels eines von einem Gebläse 37 erzeugten Luftstroms abgekühlt, wodurch eine Verschmutzung der Erntemesser vorteilhaft vermieden werden kann. Alternativ könnte jedoch auch Wasser, eine Emulsion, ein Öl usw. für eine Abkühlung genutzt werden.

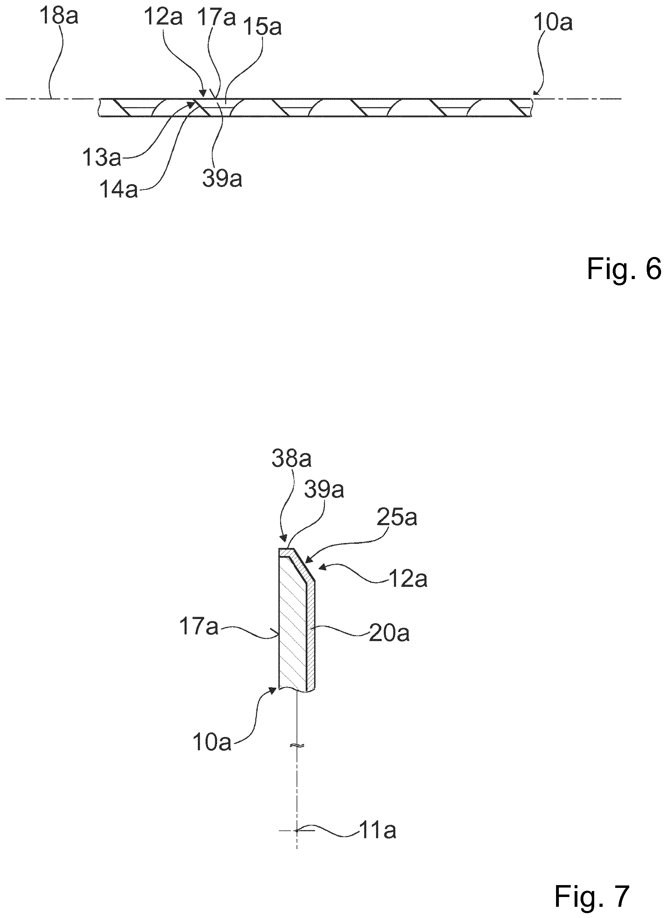

In den Figuren 6 und 7 sind Ausschnitte eines alternativen Erntemessers dargestellt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels in den Figuren 1 bis 5 verwiesen werden kann. Zur Unterscheidung der Ausführungsbeispiele ist der Buchstabe a in den Bezugszeichen des Ausführungsbeispiels in den Figuren 6 und 7 hinzugefügt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels in den Figuren 1 bis 5 verwiesen werden.

Das Erntemesser in den Figuren 6 und 7 weist einen Grundkörper 10a mit Zähnen 12a auf, die neben einer ersten Schneide 13a eine zweite Schneide 38a mit einer Schneidkante 39a aufweisen, die sich in ihrer Materialstärke von einer Schneidkanten 14a der ersten Schneide 13a unterscheidet. Die Schneidkante 39a weist eine größere Materialstärke auf als die Schneidkante 14a.

Der Zahn 12a weist neben einem Bereich 21a, der in Richtung der Schneidkante 14a, parallel zu einer Hauptebene 18a des Grundkörpers 10a eine kontinuierlich abnehmende Materialstärke aufweist, einen weiteren Bereich 25a auf, der, in Richtung der Schneidkante 39a, parallel zur Hauptebene 18a des Grundkörpers 10a und in radialer Richtung zu einer Antriebsrotationsachse 11a, eine kontinuierlich abnehmende Materialstärke aufweist. Der Zahn 12a weist damit einen Zahnrücken 15a auf, der zudem die Schneidkante 39a bildet.

### Bezugszeichenliste

- 10: Grundkörper
- 11: Antriebsrotationsachse
- 12: Zahn
- 13: Schneide
- 14: Schneidkante
- 15: Zahnrücken
- 16: Richtung
- 17: Seitenfläche
- 18: Hauptebene
- 19: Zahnteilung
- 20: Beschichtung
- 21: Bereich
- 22: Zahngrund
- 23: Schneidrichtung
- 24: Bereich
- 25: Bereich
- 26: Bereich
- 27: Erstreckung
- 28: Gesamterstreckung
- 29: Umfangsrichtung
- 30: Station
- 31: Station
- 32: Station
- 33: Station
- 34: Brenner
- 35: Brenner
- 36: Brenner
- 37: Gebläse
- 38: Schneide
- 39: Schneidkante

## Patentansprüche

1. Erntemesser, welches von einem Kreisringsegment gebildet ist und ein Sägezahnprofil aufweist, mit einem Grundkörper (10; 10a), der dazu vorgesehen ist, um eine ihm zugeordnete Antriebsrotationsachse (11; 11a) in einer Maschine rotierend angewandt zu werden, und an seinem Umfang mehrere Zähne (12; 12a) aufweist,
wobei zumindest einer der Zähne (12; 12a) vor einer ersten Anwendung zumindest eine angeformte Schneide (13; 13a, 38a) aufweist, die sich über eine gesamte Zahnbrust des Zahns (12; 12a) erstreckt, **dadurch gekennzeichnet, dass** ein Zahnrücken (15; 15a) des zumindest einen Zahns (12; 12a) mit der zumindest einen Schneide (13; 13a, 38a) in einer Ansicht in radialer Richtung (16; 16a) zur Antriebsrotationsachse (11; 11a) keilförmig ausgebildet ist, wobei in der Ansicht in radialer Richtung (16; 16a) zur Antriebsrotationsachse (11; 11a) eine Seitenfläche (17; 17a) des Zahnrückens (15; 15a) zumindest im Wesentlichen parallel zu einer senkrecht zur Antriebsrotationsachse (11; 11a) verlaufenden Hauptebene (18; 18a) des Grundkörpers (10; 10a) verläuft.

2. Erntemesser nach Anspruch 1,
**dadurch gekennzeichnet, dass** bei dem zumindest einen Zahn (12; 12a) mit der zumindest einen Schneide (13; 13a, 38a) sich die Schneide (13; 13a, 38a) nur partiell über eine Außenkontur des Zahnes (12; 12a) erstreckt.

3. Erntemesser nach Anspruch 2,
**dadurch gekennzeichnet, dass** der zumindest eine Zahn (12) mit der zumindest einen Schneide (13) einen Zahnrücken (15) aufweist, der zumindest teilweise schneidenfrei ausgebildet ist.

4. Erntemesser nach einem der vorhergehenden Ansprüche,
**dadurch gekennzeichnet, dass** der zumindest eine Zahn (12a) zumindest zwei Schneiden (13a, 38a) mit sich in ihrer Materialstärke unterscheidenden Schneidkanten (14a, 39a) aufweist.

5. Erntemesser nach einem der vorhergehenden Ansprüche,
**dadurch gekennzeichnet, dass** der Grundkörper (10; 10a) zumindest teilweise aus einem kaltverfestigten Material gebildet ist und dass der Grundkörper (10; 10a) an seinem Außenumfang, d.h. im Bereich der Schneiden (13; 13a,38a), wärmegehärtet ist, wobei in einem weiter innenliegenden Bereich, d.h. in Richtung der Antriebsrotationsachse (11;11a), keine gesonderte Wärmehärtung vorliegt.

6. Erntemesser nach Anspruch 5,
**dadurch gekennzeichnet, dass** das kaltverfestigte Material, aus dem der Grundkörper (10; 10a) zumindest teilweise gebildet ist, eine Grundzugfestigkeit größer als 500 N/mm² und insbesondere größer als 600 N/mm² aufweist.

7. Erntemesser nach Anspruch 5 oder 6,
**dadurch gekennzeichnet, dass** das kaltverfestigte Material, aus dem der Grundkörper (10; 10a) zumindest teilweise gebildet ist, eine Grundzugfestigkeit kleiner als 1000 N/mm² und insbesondere kleiner als 900 N/mm² aufweist.

8. Erntemesser nach einem der vorhergehenden Ansprüche,
**dadurch gekennzeichnet, dass** zumindest eine Schneide zumindest teilweise mittels eines spanfreien Vorgangs, insbesondere mittels eines Prägevorgangs, angeformt ist.

9. Erntemesser nach Anspruch 8,
**dadurch gekennzeichnet, dass** zumindest eine Schneide mittels eines Warmumformvorgangs angeformt ist.

10. Erntemesser nach einem der vorhergehenden Ansprüche,
**dadurch gekennzeichnet, dass** die zumindest eine Schneide (13; 13a, 38a) zumindest teilweise mittels eines materialabtragenden, insbesondere zerspanenden Vorgangs angeformt ist.

11. Erntemesser nach einem der vorhergehenden Ansprüche,
**dadurch gekennzeichnet, dass** der Grundkörper (10; 10a) zumindest eine Zahnteilung (19; 19a) aufweist, die in Umfangsrichtung über einer Strecke von einem halben Meter zu mehr als 8 Zähnen (12; 12a) und insbesondere zu mehr als 15 Zähnen (12; 12a) führt.

12. Erntemesser nach einem der vorhergehenden Ansprüche,
**dadurch gekennzeichnet, dass** der Grundkörper (10; 10a) zumindest eine Zahnteilung (19; 19a) aufweist, die in Umfangsrichtung über einer Strecke von einem halben Meter zu weniger als 30 Zähnen (12; 12a) und insbesondere zu weniger als 28 Zähnen (12; 12a) führt.

13. Erntemesser nach einem der vorhergehenden Ansprüche,
**dadurch gekennzeichnet, dass** ein Zahnrücken (15; 15a) des zumindest einen Zahns (12; 12a) mit der zumindest einen Schneide (13; 13a, 38a) zumindest teilweise mit einer Beschichtung (20; 20a) versehen ist.

14. Verfahren zur Herstellung eines Erntemessers nach einem der vorhergehenden Ansprüche.

15. Verfahren nach Anspruch 14,
**dadurch gekennzeichnet, dass** eine Wärmeenergie, die zu einem Beschichten des Grundkörpers (10; 10a) in diesen eingebracht wird, für einen Härteprozess des Grundkörpers (10; 10a) genutzt wird und dass der Grundkörper (10; 10a) partiell wärmegehärtet wird.

## Claims

1. Harvesting knife formed of an annulus segment and having a sawtooth profile, with a base body (10; 10a) which is configured to be applied in a manner rotating in a machine around a drive rotational axis (11; 11a) allocated to the base body (10; 10a), and which comprises a plurality of teeth (12; 12a) on its circumference, wherein prior to a first application, at least one of the teeth (12; 12a) has at least one moulded-on cutter (13; 13a, 38a) which extends over an entire tooth face of the tooth (12; 12a),
**characterised in that** in a view in a radial direction (16; 16a) relative to the drive rotational axis (11; 11a), a tooth back (15; 15a) of the at least one tooth (12; 12a) having the at least one cutter (13; 13a, 38a) is formed in a wedge shape,
wherein in the view in a radial direction (16; 16a) relative to the drive rotational axis (11; 11a), a side surface (17; 17a) of the tooth back (15; 15a) extends at least substantially parallel to a main plane (18; 18a) of the base body (10; 10a) extending perpendicularly to the drive rotational axis (11; 11a).

2. Harvesting knife according to claim 1,
**characterised in that** regarding the at least one tooth (12; 12a) having the at least one cutter (13; 13a, 38a), the cutter (13; 13a, 38a) extends only partly over an outer contour of the tooth (12; 12a).

3. Harvesting knife according to claim 2,
**characterised in that** the at least one tooth (12) having the at least one cutter (13) has a tooth back (15) that is realized at least partly cutter-free.

4. Harvesting knife according to one of the preceding claims,
**characterised in that** the at least one tooth (12a) comprises at least two cutters (13a, 38a) with cutting edges (14a, 39a) of different material thicknesses.

5. Harvesting knife according to one of the preceding claims,
**characterised in that** the base body (10; 10a) is made at least partly of a work-hardened material and that the base body (10; 10a) is on its outer periphery, i. e. in the region of the cutters (13; 13a, 38a), heat-cured, wherein there is no special heat curing in a region situated further inwards, i. e. towards the drive rotational axis (11; 11a).

6. Harvesting knife according to claim 5,
**characterised in that** the work-hardened material of which the base body (10; 10a) is made at least partly has a basic tensile strength that is greater than 500 N/mm² and in particular greater than 600 N/mm².

7. Harvesting knife according to claim 5 or 6,
**characterised in that** the work-hardened material of which the base body (10; 10a) is made at least partly has a basic tensile strength that is smaller than 1,000 N/mm² and in particular smaller than 900 N/mm².

8. Harvesting knife according to one of the preceding claims,
**characterised in that** at least one cutter is moulded-on at least partly by means of a chip-free process, in particular by means of a stamping process.

9. Harvesting knife according to claim 8,
**characterised in that** at least one cutter is moulded-on by means of a hot-forming process.

10. Harvesting knife according to one of the preceding claims,
**characterised in that** the at least one cutter (13; 13a, 38a) is moulded-on at least partly by means of a material-removing process, in particular a machining process.

11. Harvesting knife according to one of the preceding claims,
**characterised in that** the base body (10; 10a) has at least one tooth spacing (19; 19a) resulting in more than 8 teeth (12; 12a), and in particular more than 15 teeth (12; 12a) over a distance of half a meter in the circumferential direction.

12. Harvesting knife according to one of the preceding claims,
**characterised in that** the base body (10; 10a) has at least one tooth spacing (19; 19a) resulting in less than 30 teeth (12; 12a), and in particular less than 28 teeth (12; 12a) over a distance of half a meter in the circumferential direction.

13. Harvesting knife according to one of the preceding claims,
**characterised in that** a tooth back (15; 15a) of the at least one tooth (12; 12a) having the at least one cutter (13; 13a, 38a) is at least partly provided with a coating (20; 20a).

14. Method for producing a harvesting knife according to one of the preceding claims.

15. Method according to claim 14,
**characterised in that** a thermal energy introduced into the base body (10; 10a) for a coating thereof is used for a hardening process of the base body (10; 10a) and that the base body (10; 10a) is partly heat-cured.

## Revendications

1. Coupeuse de récolte formée d'un segment de couronne circulaire et comprenant un profil à dents-de-scie,
avec un corps de base (10 ; 10a) conçu pour être appliqué dans une machine en tournant autour d'un axe rotatif d'entraînement (11 ; 11a) alloué audit corps de base (10 ; 10a) et comprenant plusieurs dents (12 ; 12a) sur sa circonférence,
où au moins une des dents (12 ; 12a) comporte avant d'une première application au moins une lame moulée (13 ; 13a, 38a) qui s'étend à travers d'une face de dent frontale entière de la dent (12 ; 12a),
**caractérisée en ce que** dans une vue en direction radiale (16 ; 16a) par rapport à l'axe rotatif d'entraînement (11 ; 11a), un dos de dent (15 ; 15a) de l'au moins une dent (12 ; 12a) ayant l'au moins une lame (13 ; 13a, 38a) est réalisé en forme de coin,
où dans la vue en direction radiale (16 ; 16a) par rapport à l'axe rotatif d'entraînement (11 ; 11a), une surface latérale (17 ; 17a) du dos de dent (15 ; 15a) s'étend au moins sensiblement en parallèle à un plan principal (18 ; 18a) du corps de base (10 ; 10a) s'étendant perpendiculairement à l'axe rotatif d'entraînement (11 ; 11a).

2. Coupeuse de récolte selon la revendication 1,
**caractérisée en ce que** chez l'au moins une dent (12 ; 12a) ayant l'au moins une lame (13 ; 13a, 38a), la lame (13 ; 13a, 38a) s'étend seulement partiellement à travers un contour extérieur de la dent (12 ; 12a).

3. Coupeuse de récolte selon la revendication 2,
**caractérisée en ce que** l'au moins une deent (12) ayant l'au moins une lame (13) comprend un dos de dent (15) réalisé au moins partiellement sans lame.

4. Coupeuse de récolte selon l'une des revendications précédentes,
**caractérisée en ce que** l'au moins une dent (12a) comprend au moins deux lames (13a, 38a) ayant des tranchants (14a, 39a) qui diffèrent par ses épaisseurs de matériau.

5. Coupeuse de récolte selon l'une des revendications précédentes,
**caractérisée en ce que** le corps de base (10 ; 10a) est formé au moins partiellement d'un matériau écroui à froid
et que le corps de base (10 ; 10a) est dans sa périphérie extérieure, c'est-à-dire dans la zone des lames (13 ; 13a, 38a), durci à chaud,
où il n'y a pas de durcissement à chaud spécial dans une zone située plus loin à l'intérieur, c'est-à-dire vers l'axe rotatif d'entraînement (11 ; 11a)..

6. Coupeuse de récolte selon la revendication 5,
**caractérisée en ce que** le matériau écroui à froid duquel le corps de base (10 ; 10a) est au moins partiellement formé comporte une résistance basique à la traction qui est supérieure à 500 N/mm² et en particulier supérieure à 600 N/mm².

7. Coupeuse de récolte selon la revendication 5 ou 6,
**caractérisée en ce que** le matériau écroui à froid duquel le corps de base (10 ; 10a) est au moins partiellement formé comporte une résistance basique à la traction qui est inférieure à 1000 N/mm² et en particulier inférieure à 900 mm².

8. Coupeuse de récolte selon l'une des revendications précédentes,
**caractérisée en ce qu'au** moins une lame est moulée au moins partiellement par le biais d'un procès sans copeaux, en particulier par un procès de gaufrage.

9. Coupeuse de récolte selon la revendication 8,
**caractérisée en ce qu'**au moins une lame est moulée par le biais d'un procès de façonnage thermique.

10. Coupeuse de récolte selon l'une des revendications précédentes,
**caractérisée en ce que** l'au moins une lame (13 ; 13a, 38a) est moulée au moins partiellement par le biais d'un procès d'abrasion de matériau, en particulier un procès d'usinage.

11. Coupeuse de récolte selon l'une des revendications précédentes,
**caractérisée en ce que** le corps de base (10 ; 10a) comporte au moins un pas de dents (19 ; 19a) aboutissant, à travers une distance d'un demi-mètre en direction circonférentielle, à plus de 8 dents (12 ; 12a) et en particulier à plus de 15 dents (12 ; 12a).

12. Coupeuse de récolte selon l'une des revendications précédentes,
**caractérisée en ce que** le corps de base (10 ; 10a) comporte au moins un pas de dents (19 ; 19a) aboutissant, à travers une distance d'un demi-mètre en direction circonférentielle, à moins de 30 dents (12 ; 12a) et en particulier à moins de 28 dents (12 ; 12a).

13. Coupeuse de récolte selon l'une des revendications précédentes,
**caractérisée en ce qu'**un dos de dent (15 ; 15a) de l'au moins une dent (12 ; 12a) ayant l'au moins une lame (13 ; 13a, 38a) est au moins partiellement pourvu d'un revêtement (20 ; 20a).

14. Procédé pour la production d'une coupeuse de récolte selon l'une des revendications précédentes.

15. Procédé selon la revendication 14,
**caractérisé en ce qu'une** énergie thermique introduite dans le corps de base (10 ; 10a) pour un revêtement dudit corps de base (10 ; 10a) est utilisée pour un procès de durcissement du corps de base (10 ; 10a)
et que le corps de base (10 ; 10a) est partiellement durci à chaud.
